# EUROPEAN PATENT APPLICATION

(11) **EP 4 617 103 A1**
(43) Date of publication of application: **17.09.2025**
(21) Application number: 23890485.8
(22) Date of filing: 20.10.2023
(51) Int. Cl.: B60L 15/20, H02J 7/00

(54) **ELECTRIC VEHICLE DRIVING SYSTEM, CONTROLLER, AND ELECTRIC VEHICLE**

(30) Priority: 16.11.2022 CN 202211438384
(71) Applicant: Huawei Digital Power Technologies Co., Ltd., Shenzhen, Guangdong 518043 (CN)
(72) Inventor: XU, Yankun, Shenzhen, Guangdong 518043 (CN); ZHANG, Xueliang, Shenzhen, Guangdong 518043 (CN)
(74) Representative: Maiwald GmbH
(86) International application number: PCT/CN2023/125685
(87) International publication number: WO 2024/104048

(57) **Abstract**

This application provides an electric vehicle drive system, a controller, and an electric vehicle. The electric vehicle drive system includes at least one of a generator rectifier circuit and a motor drive circuit, and a power module. A bridge arm midpoint of a first bridge arm in the power module is configured to connect to a power battery, and two ends of the first bridge arm are respectively configured to connect to two ends of a bus capacitor. Two ends of three second bridge arms connected in parallel in the generator rectifier circuit are respectively configured to connect to the two ends of the bus capacitor, and bridge arm midpoints of all the second bridge arms are separately configured to connect to a generator. Two ends of three third bridge arms connected in parallel in the motor drive circuit are respectively configured to connect to the two ends of the bus capacitor, and bridge arm midpoints of all the third bridge arms are separately configured to connect to a drive motor. According to this application, the power module can reuse a component in the generator rectifier circuit or the motor drive circuit. This reduces a volume of the electric vehicle drive system, improves energy efficiency, and further improves applicability.

## Description

This application claims priority to Chinese Patent Application No. 202211438384.6, filed with the China National Intellectual Property Administration on November 16, 2022 and entitled "ELECTRIC VEHICLE DRIVE SYSTEM, CONTROLLER, AND ELECTRIC VEHICLE", which is incorporated herein by reference in its entirety.

### TECHNICAL FIELD

This application relates to the field of power electronics technologies, and in particular, to an electric vehicle drive system, a controller, and an electric vehicle.

### BACKGROUND

With development of an electric vehicle, an electric vehicle drive system has an increasingly small volume and increasingly high power density. This needs to save space and increase endurance mileage, to improve economical efficiency of the vehicle. In an existing electric vehicle drive system, a bidirectional direct current conversion module usually needs to be added to support charging/discharging of a power battery. However, a high-power inductor and a direct current conversion module in the existing bidirectional direct current conversion module make it difficult to reduce a volume of the electric vehicle drive system and improve energy efficiency.

### SUMMARY

This application provides an electric vehicle drive system, a controller, and an electric vehicle, to reuse a component in a generator rectifier circuit or a motor drive circuit, thereby reducing a volume of the electric vehicle drive system, improving energy efficiency, and improving applicability.

The following describes this application from different aspects. It should be understood that, for the following implementations and beneficial effect of the different aspects, refer to each other.

According to a first aspect, this application provides an electric vehicle drive system, including at least one of a generator rectifier circuit and a motor drive circuit, and a power module. The power module includes a bus capacitor and a first bridge arm, a bridge arm midpoint of the first bridge arm is configured to connect to a power battery, and two ends of the first bridge arm are respectively configured to connect to two ends of the bus capacitor; the generator rectifier circuit includes three second bridge arms connected in parallel, two ends of each second bridge arm are respectively configured to connect to the two ends of the bus capacitor, and bridge arm midpoints of all the second bridge arms are separately configured to connect to a generator; and the motor drive circuit includes three third bridge arms connected in parallel, two ends of each third bridge arm are respectively configured to connect to the two ends of the bus capacitor, and bridge arm midpoints of all the third bridge arms are separately configured to connect to a drive motor. In this way, the power module can reuse a component in the generator rectifier circuit or the motor drive circuit. This reduces a volume of the electric vehicle drive system, improves energy efficiency, and further improves applicability.

With reference to the first aspect, in a first possible implementation, a running mode of the electric vehicle drive system includes a brake regenerative mode, a pure electric drive mode, and a hybrid drive mode.

When the electric vehicle drive system runs in the brake regenerative mode, the motor drive circuit runs in a rectifier mode and charges the power battery by outputting a direct current via the power module. In this way, kinetic energy generated by the drive motor can be recovered in the brake regenerative mode, and is converted into electric energy stored by the power battery for subsequent use.

When the electric vehicle drive system runs in the pure electric drive mode, the motor drive circuit receives power supplied by the power battery via the power module, and runs in an inverter mode to output a three-phase current to the drive motor. In this way, the power battery can provide kinetic energy for the drive motor via the power module and the motor drive circuit. This is applicable to a scenario in which the power battery has sufficient power, and has advantages of quietness, smoothness, and zero fuel consumption brought by pure electric power supply.

When the electric vehicle drive system runs in the hybrid drive mode, the generator rectifier circuit runs in a rectifier mode to supply power to the motor drive circuit, and the motor drive circuit runs in an inverter mode to output a three-phase current to the drive motor. In this way, in the hybrid drive mode, the drive motor and the generator can provide power at the same time, and the generator can convert kinetic energy generated by an engine into electric energy and transmit the electric energy to the motor drive circuit, and then provide the kinetic energy to the drive motor via the motor drive circuit, to drive an electric vehicle, and improve a drive rate.

With reference to the first possible implementation of the first aspect, in a second possible implementation, when the electric vehicle drive system runs in the brake regenerative mode or the pure electric drive mode, an upper switching transistor and a lower switching transistor in the first bridge arm are turned off or alternately turned on, an upper switching transistor and a lower switching transistor in each second bridge arm in the generator rectifier circuit are turned off, and an upper switching transistor and a lower switching transistor in each third bridge arm in the motor drive circuit are alternately turned on. In other words, the generator drive circuit runs in a standby mode, the motor drive circuit runs in a rectifier mode, the power battery runs in a charging mode when the electric vehicle drive system runs in the brake regenerative mode, and the power battery runs in a discharging mode when the electric vehicle drive system runs in the pure electric drive mode.

With reference to the first possible implementation of the first aspect, in a third possible implementation, when the electric vehicle drive system runs in the hybrid drive mode, an upper switching transistor and a lower switching transistor in the first bridge arm are turned off or alternately turned on, an upper switching transistor and a lower switching transistor in each second bridge arm in the generator rectifier circuit are alternately turned on, and an upper switching transistor and a lower switching transistor in each third bridge arm in the motor drive circuit are alternately turned on. In other words, the generator drive circuit runs in a rectifier mode, the motor drive circuit runs in an inverter mode, and the power battery runs in a discharging mode, a charging mode, or a standby mode.

With reference to the first possible implementation of the first aspect, in a fourth possible implementation, the hybrid drive mode includes a first hybrid drive mode, a second hybrid drive mode, and a third hybrid drive mode.

When the electric vehicle drive system runs in the first hybrid drive mode, the generator rectifier circuit runs in a rectifier mode, supplies power to the motor drive circuit, and charges the power battery via the power module, and the motor drive circuit runs in an inverter mode and outputs a three-phase current to the drive motor. The first hybrid drive mode may be applicable to a scenario in which the power battery has insufficient power, and the generator needs to perform supplementary charging on the power battery, to maintain a high power requirement of the power battery.

When the electric vehicle drive system runs in the second hybrid drive mode, the generator rectifier circuit runs in a rectifier mode and supplies power to the motor drive circuit, the power battery supplies power to the motor drive circuit via the power module, and the motor drive circuit runs in an inverter mode and outputs a three-phase current to the drive motor. The second hybrid drive mode may be applicable to a high-speed overtaking scenario, and acceleration performance can be improved when the generator rectifier circuit and the motor drive circuit operate at the same time.

When the electric vehicle drive system runs in the third hybrid drive mode, the generator rectifier circuit runs in a rectifier mode and supplies power to the motor drive circuit, and the motor drive circuit runs in an inverter mode and outputs a three-phase current to the drive motor. The third hybrid drive mode may be applicable to a scenario in which the power battery has high power, and an output of the generator can maintain a power requirement of the drive motor. This can improve efficiency in some operating conditions.

With reference to the fourth possible implementation of the first aspect, in a fifth possible implementation, the first bridge arm, the second bridge arm, and the third bridge arm each include an upper switching transistor and a lower switching transistor that are connected in series. When the electric vehicle drive system runs in the first hybrid drive mode or the second hybrid drive mode, the upper switching transistor and the lower switching transistor in the first bridge arm are turned off or alternately turned on, the upper switching transistor and the lower switching transistor in the second bridge arm in the generator rectifier circuit are alternately turned on, and the upper switching transistor and the lower switching transistor in the third bridge arm in the motor drive circuit are alternately turned on. In other words, the generator drive circuit runs in a rectifier mode, the motor drive circuit runs in an inverter mode, and the power battery runs in a discharging mode, a charging mode, or a standby mode.

With reference to the fourth possible implementation of the first aspect, in a sixth possible implementation, when the electric vehicle drive system runs in the third hybrid drive mode, an upper switching transistor and a lower switching transistor in the first bridge arm are turned off, an upper switching transistor and a lower switching transistor in each second bridge arm in the generator rectifier circuit are alternately turned on, and an upper switching transistor and a lower switching transistor in each third bridge arm in the motor drive circuit are alternately turned on. In other words, the generator drive circuit runs in a rectifier mode, the motor drive circuit runs in an inverter mode, and the power battery runs in a standby mode.

With reference to the first possible implementation of the first aspect, in a seventh possible implementation, the electric vehicle drive system further includes the engine, and when the engine drives the electric vehicle, the power module, the motor drive circuit, and the generator rectifier circuit respectively run in a standby mode. In this way, the engine drives the electric vehicle. This can be applicable to a high-speed cruise scenario.

With reference to the seventh possible implementation of the first aspect, in an eighth possible implementation, the first bridge arm, the second bridge arm, and the third bridge arm each include an upper switching transistor and a lower switching transistor that are connected in series. When the engine drives the electric vehicle, the upper switching transistor and the lower switching transistor in the first bridge arm are turned off, the upper switching transistor and the lower switching transistor in the second bridge arm in the generator rectifier circuit are turned off, and the upper switching transistor and the lower switching transistor in the third bridge arm in the motor drive circuit are turned off. In other words, the power module, the motor drive circuit, and the generator rectifier circuit all run in the standby mode.

With reference to the first possible implementation of the first aspect to the eighth possible implementation of the first aspect, in a ninth possible implementation, the first bridge arm, the second bridge arm, and the third bridge arm each include the upper switching transistor and the lower switching transistor that are connected in series, and the drive motor and the generator each include three power windings. A drain terminal of the upper switching transistor in the first bridge arm and a source terminal of the lower switching transistor in the first bridge arm are respectively used as one end of the first bridge arm, and a source terminal of the upper switching transistor in the first bridge arm and a drain terminal of the lower switching transistor in the first bridge arm are connected in series to the bridge arm midpoint of the first bridge arm; a drain terminal of the upper switching transistor in the second bridge arm and a source terminal of the lower switching transistor in the second bridge arm are respectively used as one end of the second bridge arm, a source terminal of the upper switching transistor in the second bridge arm and a drain terminal of the lower switching transistor in the second bridge arm are connected in series to the bridge arm midpoint of the second bridge arm, the bridge arm midpoint of the second bridge arm is configured to connect one end of a power winding in the generator, and the other ends of the three power windings in the generator are connected in parallel; and a drain terminal of the upper switching transistor in the third bridge arm and a source terminal of the lower switching transistor in the third bridge arm are respectively used as one end of the third bridge arm, a source terminal of the upper switching transistor in the third bridge arm and a drain terminal of the lower switching transistor in the third bridge arm are connected in series to the bridge arm midpoint of the third bridge arm, the bridge arm midpoint of the third bridge arm is configured to connect one end of a power winding in the drive motor, and the other ends of the three power windings in the drive motor are connected in parallel. In this way, the power module can reuse the bridge arm in the generator rectifier circuit or the motor drive circuit and the power winding in the generator or the drive motor, to reduce a volume of the electric vehicle drive system, improve energy efficiency, and further improve applicability.

With reference to the ninth possible implementation of the first aspect, in a tenth possible implementation, the power battery is configured to connect a parallel connection point of the three power windings in the generator or a parallel connection point of the three power windings in the drive motor. In this way, the power battery can further perform charging/discharging with a loop formed by the power module, the generator rectifier circuit, and the generator, or may perform charging/discharging with a loop formed by the power module, the motor drive circuit, and the drive motor. This can improve charging/discharging efficiency.

According to a second aspect, this application provides a controller for an electric vehicle drive system including at least one of a generator rectifier circuit and a motor drive circuit, and a power module. The power module includes a bus capacitor and a first bridge arm, the generator rectifier circuit includes three second bridge arms connected in parallel, the motor drive circuit includes three third bridge arms connected in parallel, a bridge arm midpoint of the first bridge arm is configured to connect to a power battery, two bridge arm ends of the first bridge arm are respectively configured to connect two bridge arm ends of each second bridge arm or two bridge arm ends of each third bridge arm, bridge arm midpoints of all the second bridge arms are separately configured to connect to a generator, and bridge arm midpoints of all the third bridge arms are separately configured to connect to a drive motor.

The controller is configured to: control an upper switching transistor and a lower switching transistor in the first bridge arm to be alternately turned on, so that the two ends of the first bridge arm output direct currents to two ends of the three third bridge arms; and control an upper switching transistor and a lower switching transistor in each third bridge arm to be alternately turned on, so that bridge arm midpoints of the three third bridge arms output three-phase alternating currents; or control an upper switching transistor and a lower switching transistor in the first bridge arm to be alternately turned on, so that the two ends of the first bridge arm output direct currents to two ends of the three third bridge arms; and control an upper switching transistor and a lower switching transistor in each second bridge arm to be alternately turned on, so that two ends of the three second bridge arms output direct currents; or control upper switching transistors and lower switching transistors in the three second bridge arms to be turned off. In this way, a turn-on state and a turn-off state of the switching transistors in the generator rectifier circuit and the power module can be controlled, or a turn-on state and a turn-off state of the switching transistors in the generator rectifier circuit and the power module can be controlled, so that the power battery independently supplies power to the drive motor or the power battery and the generator supply power to the drive motor at the same time.

With reference to the second aspect, in a first possible implementation, the controller is configured to: control the upper switching transistor and the lower switching transistor in each second bridge arm to be alternately turned on, so that the two ends of the three second bridge arms output direct currents; and control the upper switching transistor and the lower switching transistor in the first bridge arm to be alternately turned on, so that the bridge arm midpoint of the first bridge arm transmits a direct current to charge the power battery. In this way, the generator supplies power to the power battery.

With reference to the second aspect, in a second possible implementation, the controller is configured to: control the upper switching transistor and the lower switching transistor in each third bridge arm to be alternately turned on, so that the two ends of the three third bridge arms output direct currents; and control the upper switching transistor and the lower switching transistor in the first bridge arm to be alternately turned on, so that the bridge arm midpoint of the first bridge arm transmits a direct current to charge the power battery. In this way, the power battery can store recovered electric energy in kinetic energy generated by the drive motor.

With reference to the second aspect, in a third possible implementation, the controller is configured to: control the upper switching transistor and the lower switching transistor in each second bridge arm to be turned off, and control the upper switching transistor and the lower switching transistor in the first bridge arm to be alternately turned on and the upper switching transistor and the lower switching transistor in each third bridge arm to be alternately turned on, so that the two ends of the three third bridge arms output direct currents to charge the power battery via a turned-on switching transistor in the first bridge arm and the bridge arm midpoint of the first bridge arm. In this way, when the generator rectifier circuit is not in operation, the power battery can store recovered electric energy in kinetic energy generated by the drive motor.

With reference to the second aspect, in a fourth possible implementation, the controller is configured to: control the upper switching transistor and the lower switching transistor in the first bridge arm to be turned off, and control the upper switching transistor and the lower switching transistor in each second bridge arm to be alternately turned on, so that the two ends of the three second bridge arms output direct currents; and control the upper switching transistors and the lower switching transistors in the three third bridge arms to be alternately turned on, so that the bridge arm midpoints of the three third bridge arms output three-phase alternating currents. In this way, the generator supplies power to the drive motor, and an electric vehicle can be in a hybrid drive mode.

With reference to the second aspect, in a fifth possible implementation, the controller is configured to: control the upper switching transistor and the lower switching transistor in the first bridge arm to be turned off, control the upper switching transistor and the lower switching transistor in each second bridge arm to be turned off, and control the upper switching transistor and the lower switching transistor in each third bridge arm to be turned off, so that an engine drives the electric vehicle. In this way, when none of the generator rectifier circuit, the power module, and the motor drive circuit is in operation, the engine drives the electric vehicle.

According to a third aspect, this application provides an electric vehicle, including a generator, a drive motor, and the drive system described in the first aspect, or a generator, a drive motor, a generator rectifier circuit, a motor drive circuit, a power module, and the controller described in the second aspect, or a generator, a drive motor, a drive system, a generator rectifier circuit, a motor drive circuit, a power module, and the controller described in the second aspect.

According to a fourth aspect, an embodiment of this application provides a control method for an electric vehicle drive system. The control method is applicable to a controller, and the electric vehicle drive system includes at least one of a generator rectifier circuit and a motor drive circuit, and a power module. The power module includes a bus capacitor and a first bridge arm, the generator rectifier circuit includes three second bridge arms connected in parallel, the motor drive circuit includes three third bridge arms connected in parallel, a bridge arm midpoint of the first bridge arm is configured to connect to a power battery, two bridge arm ends of the first bridge arm are respectively configured to connect to two bridge arm ends of the three second bridge arms or two bridge arm ends of the three third bridge arms, bridge arm midpoints of the three second bridge arms are separately configured to connect to a generator, bridge arm midpoints of the three third bridge arms are separately configured to connect to a drive motor, and the first bridge arm, the second bridge arm, and the third bridge arm each include two switching transistors connected in series.

The control method includes: controlling an upper switching transistor and a lower switching transistor in the first bridge arm to be alternately turned on, so that the two ends of the first bridge arm output direct currents to the two ends of the three third bridge arms; and controlling an upper switching transistor and a lower switching transistor in each third bridge arm to be alternately turned on, so that the bridge arm midpoints of the three third bridge arms output three-phase alternating currents; or controlling an upper switching transistor and a lower switching transistor in the first bridge arm to be alternately turned on, so that the two ends of the first bridge arm output direct currents to the two ends of the three third bridge arms; and controlling an upper switching transistor and a lower switching transistor in each second bridge arm to be alternately turned on, so that the two ends of the three second bridge arms output direct currents; or controlling upper switching transistors and lower switching transistors in the three second bridge arms to be turned off.

With reference to the fourth aspect, in a first possible implementation, the control method further includes: controlling the upper switching transistor and the lower switching transistor in each second bridge arm to be alternately turned on, so that the two ends of the three second bridge arms output direct currents; and controlling the upper switching transistor and the lower switching transistor in the first bridge arm to be alternately turned on, so that the bridge arm midpoint of the first bridge arm transmits a direct current to charge the power battery; or controlling the upper switching transistor and the lower switching transistor in each third bridge arm to be alternately turned on, so that the two ends of the three third bridge arms output direct currents; and controlling the upper switching transistor and the lower switching transistor in the first bridge arm to be alternately turned on, so that the bridge arm midpoint of the first bridge arm transmits a direct current to charge the power battery.

With reference to the fourth aspect, in a second possible implementation, the control method further includes: controlling the upper switching transistor and the lower switching transistor in each second bridge arm to be turned off, and controlling the upper switching transistor and the lower switching transistor in the first bridge arm to be alternately turned on and the upper switching transistor and the lower switching transistor in each third bridge arm to be alternately turned on, so that the two ends of the three third bridge arms output direct currents to charge the power battery via a turned-on switching transistor in the first bridge arm and the bridge arm midpoint of the first bridge arm.

With reference to the fourth aspect, in a third possible implementation, the control method further includes: controlling the upper switching transistor and the lower switching transistor in the first bridge arm to be turned off, and controlling the upper switching transistor and the lower switching transistor in each second bridge arm to be alternately turned on, so that the two ends of the three second bridge arms output direct currents; and controlling the upper switching transistors and the lower switching transistors in the three third bridge arms to be alternately turned on, so that the bridge arm midpoints of the three third bridge arms output three-phase alternating currents.

With reference to the fourth aspect, in a fourth possible implementation, the control method further includes: controlling the upper switching transistor and the lower switching transistor in the first bridge arm to be turned off, controlling the upper switching transistor and the lower switching transistor in each second bridge arm to be turned off, and controlling the upper switching transistor and the lower switching transistor in each third bridge arm to be turned off, so that an engine drives an electric vehicle.

According to a fifth aspect, an embodiment of this application provides a chip system, where the chip system includes a processor, a memory, and an interface circuit. The memory, the interface circuit, and the processor are interconnected through a line, the memory stores instructions, and the instructions are executed by the processor to perform the control method according to the fourth aspect.

According to a sixth aspect, an embodiment of this application further provides a computer device, including a memory and a processor connected to the memory. The memory is configured to store a computer program, and the processor is configured to invoke the computer program, to enable the computer device to perform the control method according to the fourth aspect.

According to a seventh aspect, an embodiment of this application further provides a computer-readable storage medium. The computer-readable storage medium stores a computer program. The computer program is suitable for being loaded and executed by a processor, to enable a computer device having the processor to perform the control method according to the fourth aspect.

According to an eighth aspect, an embodiment of this application further provides a computer program product, including computer instructions. The computer instructions are stored in a computer-readable storage medium. A processor of a computer device reads the computer instructions from the computer-readable storage medium, and executes the computer instructions, to enable the computer device to perform the control method according to the fourth aspect.

### BRIEF DESCRIPTION OF DRAWINGS

The following describes accompanying drawings used in embodiments of this application.
FIG. 1 to FIG. 3 each are a diagram of a structure of an electric vehicle drive system according to this application;
FIG. 4 to FIG. 6 each are a diagram of another structure of an electric vehicle drive system according to this application;
FIG. 7 is a circuit diagram of a closed loop according to this application; and
FIG. 8 to FIG. 10 each are another circuit diagram of a closed loop according to this application.

### DESCRIPTION OF EMBODIMENTS

An electric vehicle drive system provided in this application is applicable to an electric vehicle. A form of the electric vehicle may include but is not limited to an electric vehicle, an electric recreation device, an electric train, an electric bicycle, an electric golf vehicle, or another electric vehicle. This may be specifically determined based on an actual application scenario, and is not limited herein. The electric vehicle drive system provided in this application may be applicable to different application scenarios, for example, an application scenario of an electric vehicle and an application scenario of an electric recreation device. This application is described by using an application scenario of a hybrid vehicle as an example. In embodiments of this application, the electric vehicle drive system may also be referred to as an electric vehicle power system.

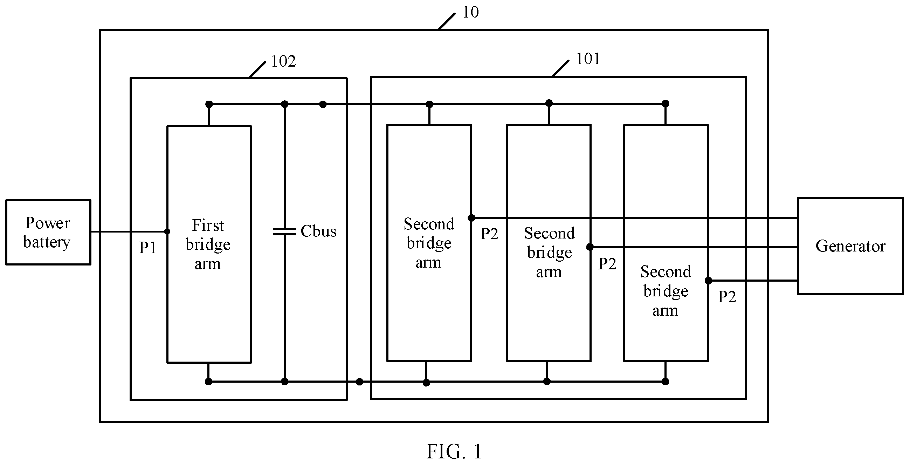

The following describes, with reference to FIG. 1 to FIG. 10, an electric vehicle drive system, a controller for the electric vehicle drive system, and an operating principle thereof that are provided in this application by using examples.

FIG. 1 to FIG. 3 each are a diagram of a structure of an electric vehicle drive system according to this application. As shown in FIG. 1, an electric vehicle drive system 10 includes a generator rectifier circuit 101 and a power module 102. The power module 102 includes a bus capacitor Cbus and a first bridge arm. A bridge arm midpoint P1 of the first bridge arm is configured to connect to a power battery, and two ends of the first bridge arm are respectively configured to connect to two ends of the bus capacitor Cbus. The generator rectifier circuit 101 includes three second bridge arms connected in parallel, two ends of each three second bridge arm are respectively configured to connect to the two ends of the bus capacitor Cbus, and bridge arm midpoints P2 of the three second bridge arms are separately configured to connect to a generator. In this way, when the generator rectifier circuit 101 runs in a rectifier mode, the generator rectifier circuit 101 charges the power battery via the power module 102. The power battery stores energy and can provide electric energy later.

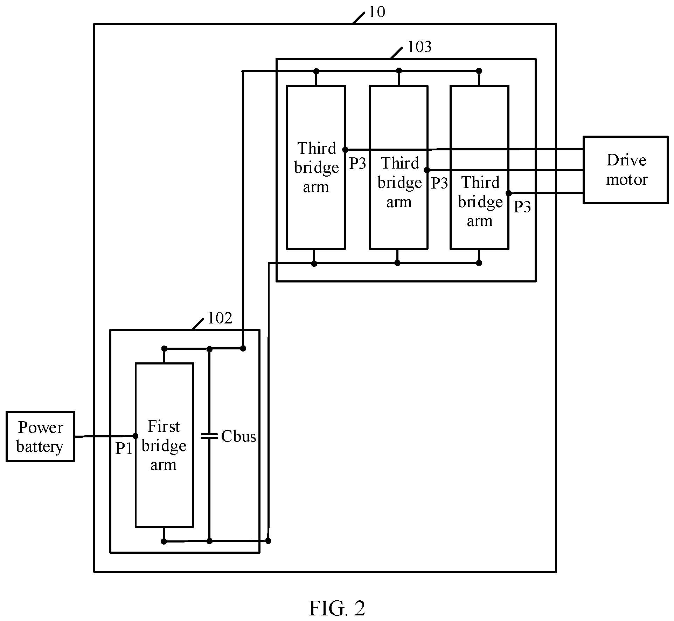

As shown in FIG. 2, an electric vehicle drive system 10 includes a motor drive circuit 103 and a power module 102. The power module 102 may include a bus capacitor Cbus and a first bridge arm. A bridge arm midpoint P1 of the first bridge arm is configured to connect to a power battery, and two ends of the first bridge arm are respectively configured to connect to two ends of the bus capacitor Cbus. The motor drive circuit 103 includes three third bridge arms connected in parallel, and bridge arm midpoints P3 of the three third bridge arms are separately configured to connect to a drive motor. In this way, the motor drive circuit 103 runs in a rectifier mode, and the motor drive circuit 103 charges the power battery via the power module 102. The motor drive circuit 103 runs in an inverter mode, and the motor drive circuit 103 receives power supplied by the power battery via the power module 102, and outputs a three-phase current to the drive motor.

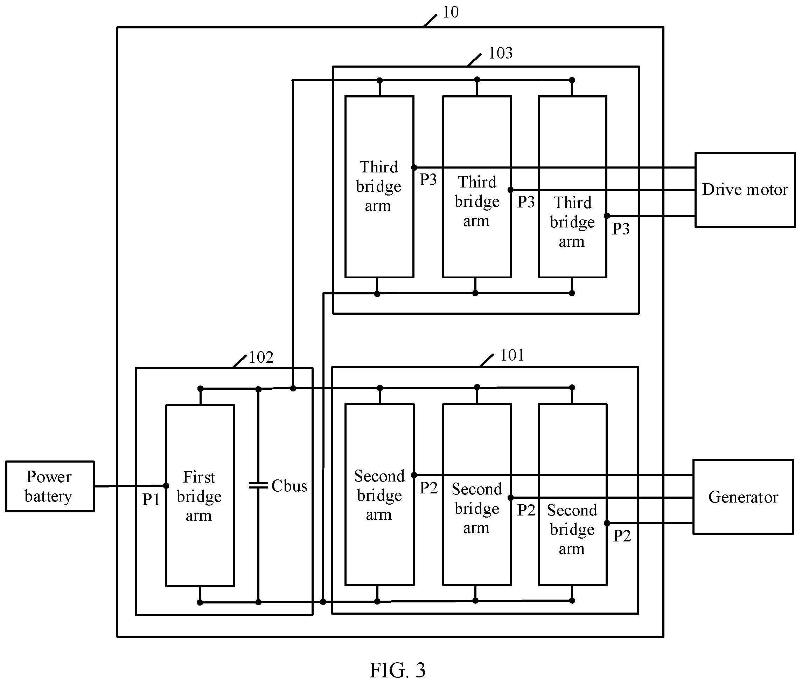

As shown in FIG. 3, an electric vehicle drive system 10 may include a generator rectifier circuit 101, a power module 102, and a motor drive circuit 103. For connection relationships between the generator rectifier circuit 101, the power module 102, the motor drive circuit 103, a power battery, a generator, and a drive motor, refer to the description in FIG. 1 and FIG. 2. Details are not described herein again.

In this embodiment of this application, a first bridge arm, a second bridge arm, and a third bridge arm each include two switching transistors connected in series. The two switching transistors may be respectively referred to as an upper switching transistor and a lower switching transistor based on locations, and may be respectively referred to as a primary switching transistor and a secondary switching transistor based on duration of sending a PWM driver gating signal. In some feasible implementations, the switching transistor may be a metal-oxide-semiconductor field-effect transistor (metal-oxide-semiconductor field-effect transistor, MOSFET) or an insulated gate bipolar transistor (insulated gate bipolar transistor, IGBT) made of a semiconductor material such as silicon (silicon, Si), a third-generation wide bandgap semiconductor material such as silicon carbide (silicon carbide, SiC), gallium nitride (gallium nitride, GaN), diamond (diamond), or zinc oxide (zinc oxide, ZnO), or other materials. This is not limited herein.

It should be understood that, two switching transistors in a same bridge arm may be in an alternate relationship of sending a PWM driver gating signal, or both of them are in a turn-off state, but should be avoided from being in a state of sending a PWM driver gating signal at the same time. A phase difference between carriers of switching transistors in a plurality of bridge arms is not limited in this application. For example, a phase difference between carriers of three turned on switching transistors in three second bridge arms of the generator rectifier circuit 101 may be 120 degrees.

In this embodiment of this application, a bus capacitor Cbus is configured to perform voltage stabilization and filtering on a direct current output by the generator rectifier circuit 101, the motor drive circuit 103, or the power battery.

For example, the bus capacitor Cbus may perform voltage stabilization and filtering on a direct current output by the generator rectifier circuit 101. In an embodiment, after voltage stabilization and filtering by the bus capacitor Cbus is performed, a direct current output by the generator rectifier circuit 101 is transmitted to the motor drive circuit 103 or the power module 102. In another embodiment, after voltage stabilization and filtering by the bus capacitor Cbus is performed, a direct current output by the generator rectifier circuit 101 is transmitted to the motor drive circuit 103 and the power module 102.

For example, the bus capacitor Cbus may perform voltage stabilization and filtering on a direct current output by the motor drive circuit 103. After the direct current output by the motor drive circuit 103 undergoes voltage stabilization and filtering by the bus capacitor Cbus, the power battery is charged via the power module 102.

For example, the bus capacitor Cbus may perform voltage stabilization and filtering on a direct current output by the power battery. After voltage stabilization and filtering by the bus capacitor Cbus, the direct current output by the power battery is transmitted to the motor drive circuit 103.

The electric vehicle drive system 10 may include the foregoing three forms, and may further include another form. For example, the electric vehicle drive system includes at least one of a generator rectifier circuit and a motor drive circuit, and a power module, but the power module does not include a bus capacitor, and at least one of the generator rectifier circuit and the motor drive circuit includes a bus capacitor. For another example, the electric vehicle drive system includes at least one of a generator rectifier circuit and a motor drive circuit, and a bus capacitor and a power module.

Specific circuit topologies of the generator rectifier circuit 101 and the motor drive circuit 103 may be modified based on an actual application scenario. In this embodiment of this application, FIG. 1 or FIG. 3 is used as an example of a specific circuit topology of the generator rectifier circuit 101, and FIG. 2 or FIG. 3 is used as an example of the motor drive circuit 103. This is not limited herein.

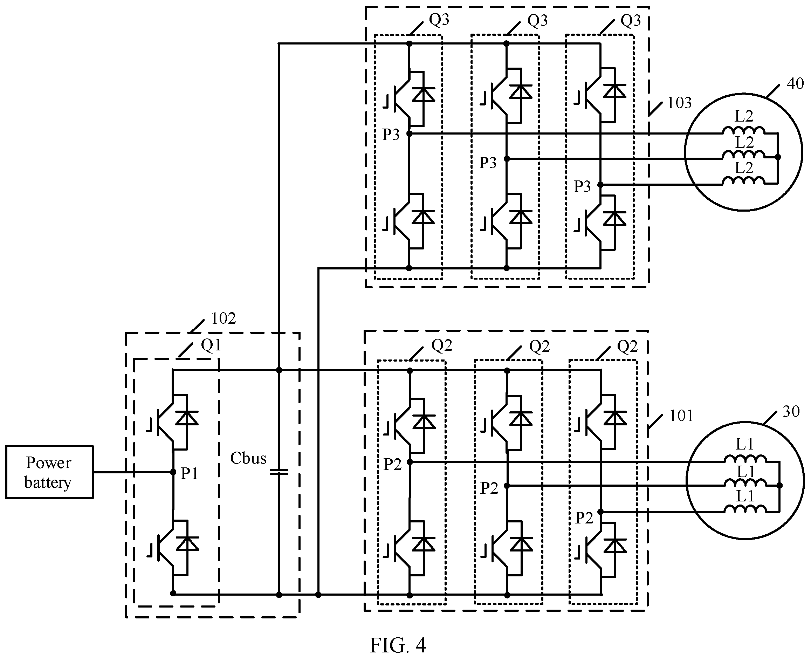

In some feasible examples, FIG. 4 is a diagram of another structure of the electric vehicle drive system according to an embodiment of this application. As shown in FIG. 4, an electric vehicle drive system 10 includes a generator rectifier circuit 101, a power module 102, and a motor drive circuit 103. For connection relationships between the generator rectifier circuit 101, the power module 102, the motor drive circuit 103, a power battery, a generator 30, and a drive motor 40, refer to the description in FIG. 1 and FIG. 2, and details are not described herein again.

Still refer to FIG. 4. A first bridge arm Q1, each second bridge arm Q2, and each third bridge arm Q3 respectively include an upper switching transistor and a lower switching transistor that are connected in series, the generator 30 includes three power windings L1, and the drive motor 40 includes three power windings L2. A drain terminal of the upper switching transistor in the first bridge arm Q1 and a source terminal of the lower switching transistor in the first bridge arm Q1 are respectively used as one end of the first bridge arm Q1 and are configured to connect two ends of a bus capacitor Cbus. A source terminal of the upper switching transistor in the first bridge arm Q1 and a drain terminal of the lower switching transistor in the first bridge arm Q1 are connected in series to a bridge arm midpoint P1 of the first bridge arm Q1, and the bridge arm midpoint P1 of the first bridge arm Q1 is configured to connect to the power battery. A drain terminal of the upper switching transistor in each second bridge arm Q2 and a source terminal of the lower switching transistor in the second bridge arm Q2 are respectively used as one end of the second bridge arm Q2 and are configured to connect the two ends of the bus capacitor Cbus. A source terminal of the upper switching transistor in each second bridge arm Q2 and a drain terminal of the lower switching transistor in the second bridge arm Q2 are connected in series to a bridge arm midpoint P2 of the second bridge arm Q2. A bridge arm midpoint P2 of each second bridge arm Q2 is configured to connect one end of a power winding L1 in the generator 30, and the other ends of the three power windings L1 in the generator 30 are connected in parallel. A drain terminal of the upper switching transistor in each third bridge arm Q3 and a source terminal of the lower switching transistor in the third bridge arm Q3 are respectively used as one end of the third bridge arms Q3 and are configured to connect the two ends of a bus capacitor Cbus. A source terminal of the upper switching transistor in each third bridge arm Q3 and a drain terminal of the lower switching transistor in the third bridge arm Q3 are connected in series to a bridge arm midpoint P3 of the third bridge arm Q3. A bridge arm midpoint P3 of each third bridge arm Q3 is configured to connect one end of a power winding L2 in the drive motor 40, and the other ends of the three power windings L2 in the drive motor 40 are connected in parallel.

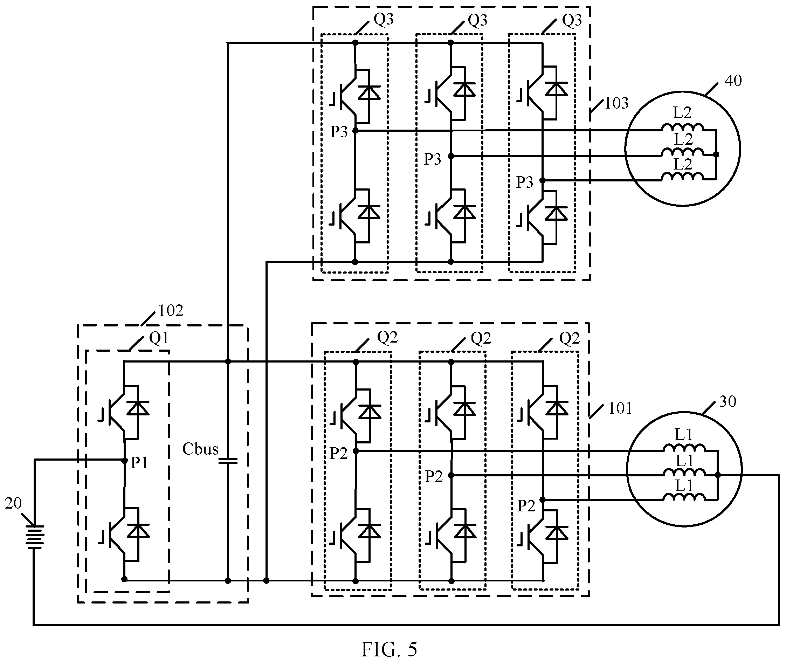

In some feasible examples, as shown in FIG. 5, one end of a power battery 20 is configured to connect to the bridge arm midpoint P1 of the first bridge arm Q1, and the other end of the power battery 20 is configured to connect to parallel connection points of the three power windings L1 in the generator 30. In this way, the power battery 20 can form a closed loop with the first bridge arm Q1, the bus capacitor Cbus, the generator rectifier circuit 101, and the generator 30, and can further form another closed loop with the first bridge arm Q1, the generator rectifier circuit 101, and the generator 30. The power module 102 can reuse the bridge arm in the generator rectifier circuit 101 and the power winding in the generator 30. This reduces a volume of the electric vehicle drive system 10. The power battery 20 may further perform charging/discharging with a loop formed by the power module 102, the generator rectifier circuit 101, and the generator 30. This can improve charging/discharging efficiency.

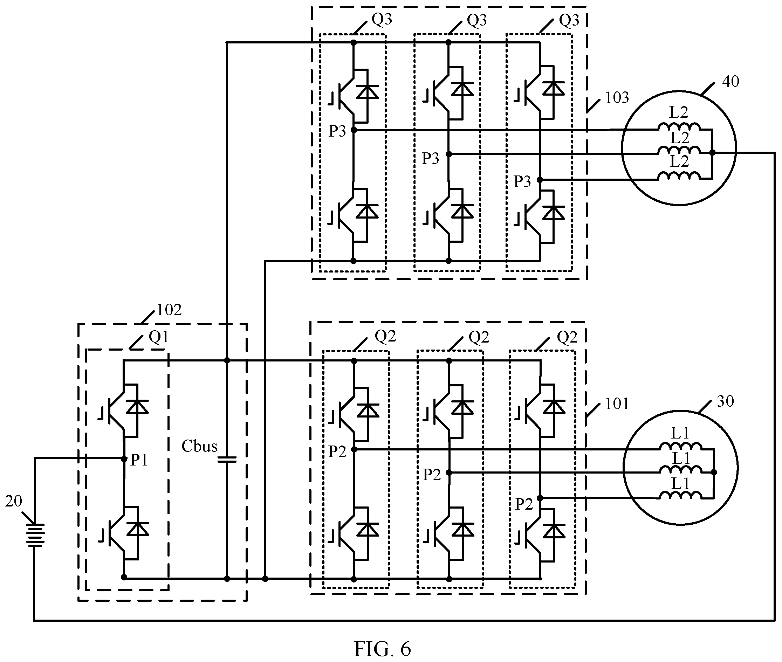

Alternatively, in some feasible examples, as shown in FIG. 6, one end of a power battery 20 is configured to connect to the bridge arm midpoint P1 of the first bridge arm Q1, and the other end of the power battery 20 is configured to connect to parallel connection points of the three power windings L2 in the drive motor 40. In this way, the power battery 20 can form a closed loop with the first bridge arm Q1, the bus capacitor Cbus, the motor drive circuit 103, and the drive motor 40, and can further form another closed loop with the first bridge arm Q1, the motor drive circuit 103, and the drive motor 40. The power module 102 can reuse the bridge arm in the motor drive circuit 103 and the power winding in the drive motor 40. This reduces a volume of the electric vehicle drive system 10. The power battery 20 may further perform charging/discharging with a loop formed by the power module 102, the motor drive circuit 103, and the drive motor 40. This can improve charging/discharging efficiency.

The generator rectifier circuit 101 may run in a rectifier mode to receive three-phase power supplied by the generator 30, and convert the three-phase power supply into a direct current. The motor drive circuit 103 may run in a rectifier mode to recover three-phase power supplied by the drive motor 40, and convert the three-phase power supply into a direct current. The motor drive circuit 103 may further run in an inverter mode to receive electric energy output by the bus capacitor Cbus, and convert the electric energy into an alternating current, to charge the drive motor 40. It should be understood that output voltages of the generator rectifier circuit 101 and the motor drive circuit 103 may be the same, and are input voltages required by the bus capacitor Cbus.

A running mode of the electric vehicle drive system 10 is not limited in this application, and may include a brake regenerative mode, a pure electric drive mode, a hybrid drive mode, and the like. In the brake regenerative mode, kinetic energy generated by the drive motor 40 can be recovered, and is converted into electric energy stored by the power battery 20 for subsequent use. For example, when the generator rectifier circuit 101 supplies power to the drive motor 40 via the motor drive circuit 103, the power battery 20 supplies power to the drive motor 40 via the power module 102. This can improve acceleration of an electric vehicle. In the pure electric drive mode, the power battery 20 provides kinetic energy for the drive motor 40 via the power module 102 and the motor drive circuit 103, and the generator rectifier circuit 101 and the generator 30 may run in a standby mode. A device running in a standby mode may be understood as that the device is not in operation. When an engine drives the electric vehicle, the motor drive circuit 103, the generator rectifier circuit 101, and the power module 102 may run in a standby mode. In the hybrid drive mode, the drive motor 40 and the generator 30 may provide power at the same time. The generator 30 may convert kinetic energy generated by the engine into electrical energy, transmit the electrical energy to the motor drive circuit 103, and then provide the kinetic energy to the drive motor 40 via the motor drive circuit 103, to drive the electric vehicle.

In some feasible examples, when the electric vehicle drive system 10 runs in the brake regenerative mode, the motor drive circuit 103 runs in a rectifier mode and charges the power battery 20 by outputting a direct current via the power module 102.

When the electric vehicle drive system 10 runs in the brake regenerative mode, the upper switching transistor and the lower switching transistor in the first bridge arm Q1 are turned off or alternately turned on, the upper switching transistor and the lower switching transistor in each second bridge arm Q2 in the generator rectifier circuit 101 are turned off, and the upper switching transistor and the lower switching transistor in each third bridge arm Q3 in the motor drive circuit 103 are alternately turned on. In other words, the generator rectifier circuit 101 runs in a standby mode, the motor drive circuit 103 runs in a rectifier mode, and the power battery 20 runs in a charging mode.

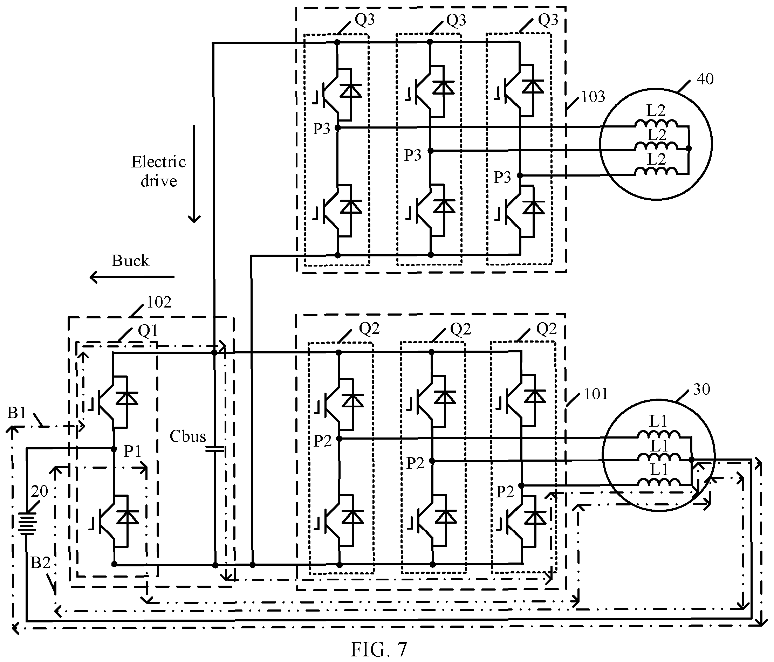

For example, FIG. 7 is a schematic of a closed circuit according to this application. In FIG. 7, an example in which the power battery 20 is configured to connect the generator 30 and a closed loop passes through the second bridge arm Q2 is used for description. As shown in FIG. 7, the closed circuit between the power battery 20, the first bridge arm Q1, the bus capacitor Cbus, the generator rectifier circuit 101, and the generator 30 is equivalent to a buck circuit. When the upper switching transistor and the lower switching transistor in the first bridge arm Q1 are alternately turned on, the upper switching transistor and the lower switching transistor in each third bridge arm Q3 are alternately turned on, and upper switching transistors and lower switching transistors in the three second bridge arms Q2 are all turned off, the motor drive circuit 103 runs in a rectifier mode and charges the power battery 20 by outputting a direct current via the power module 102, to recover electric energy generated by the drive motor 40. The electric energy in the bus capacitor Cbus may further form a closed loop B1 by using a switching transistor that is not turned on in the second bridge arm Q2, a power winding L1 connected to the switching transistor, the power battery 20, and a turned-on switching transistor in the first bridge arm Q1, so that the power winding L1 in the closed loop B1 performs energy storage. When both the upper switching transistor and the lower switching transistor in the first bridge arm Q1 are turned off, the upper switching transistor and the lower switching transistor in each third bridge arm Q3 are alternately turned on, and upper switching transistors and lower switching transistors in the three second bridge arms Q2 are all turned off, the power battery 20 may recover, via the power module 102 and the motor drive circuit 103, electric energy generated by the drive motor 40. After both the upper switching transistor and the lower switching transistor in the first bridge arm Q1 are turned off, a current of the power winding L1 cannot change abruptly, and the current of the power winding L1 flows to the power battery 20 through a freewheeling diode of a switching transistor that is not turned on in the first bridge arm Q1. The power battery 20 may form a closed loop B2 with the freewheeling diode of the switching transistor that is not turned on in the first bridge arm Q1, a switching transistor that is not turned on in the second bridge arm Q2, and a power winding L1 connected to the switching transistor. The closed loop B2 does not pass through the bus capacitor Cbus, to implement a function of charging the power battery 20 by the generator 30.

In some feasible examples, when the electric vehicle drive system 10 runs in the pure electric drive mode, the motor drive circuit 103 receives power supplied by the power battery 20 via the power module 102, and runs in an inverter mode to output a three-phase current to the drive motor 40.

When the electric vehicle drive system 10 runs in the pure electric drive mode, the upper switching transistor and the lower switching transistor in the first bridge arm Q1 are turned off or alternately turned on, the upper switching transistor and the lower switching transistor in each second bridge arm Q2 in the generator rectifier circuit 101 are turned off, and the upper switching transistor and the lower switching transistor in each third bridge arm Q3 in the motor drive circuit 103 are alternately turned on. In other words, the generator rectifier circuit 101 runs in a standby mode, the motor drive circuit 103 runs in an inverter mode, and the power battery 20 runs in a discharging mode. The pure electric drive mode may be applicable to a scenario in which the power battery 20 has sufficient power. The drive motor 40 is powered based on electric energy provided by the power battery 20, and the pure electric drive mode has advantages of quietness, smoothness, and zero fuel consumption brought by pure electric power supply.

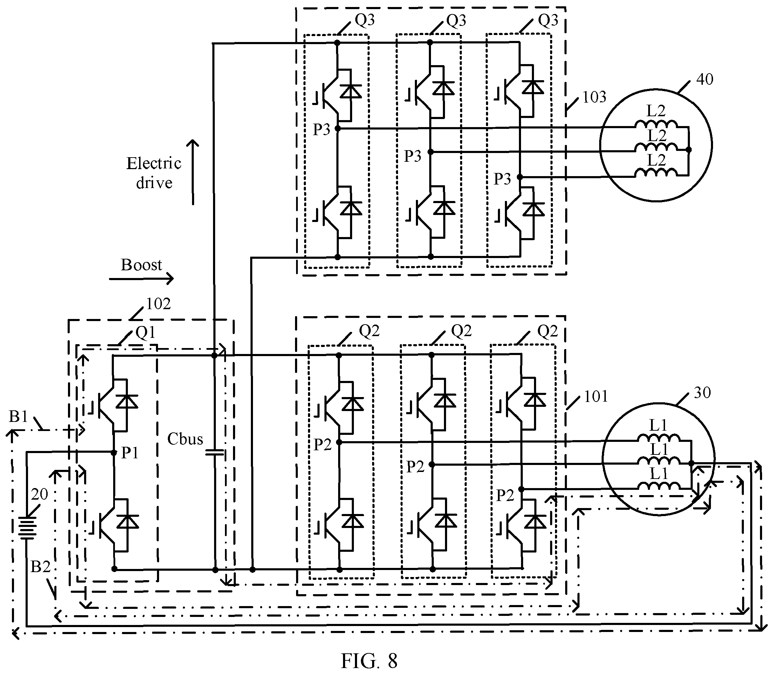

For example, FIG. 8 is another schematic of the closed circuit according to this application. In FIG. 8, an example in which the power battery 20 is configured to connect the generator 30 and a closed loop passes through the second bridge arm Q2 is used for description. As shown in FIG. 8, the closed circuit between the power battery 20, the first bridge arm Q1, the bus capacitor Cbus, the generator rectifier circuit 101, and the generator 30 is equivalent to a boost circuit. When the upper switching transistor and the lower switching transistor in the first bridge arm Q1 are alternately turned on, the upper switching transistor and the lower switching transistor in each third bridge arm Q3 are alternately turned on, and upper switching transistors and lower switching transistors in the three second bridge arms Q2 are all turned off, the power battery 20 may supply power to the motor drive circuit 103 via the power module 102, so that the motor drive circuit 103 runs in an inverter mode to output a three-phase current to the drive motor 40. The power battery 20 may further form a closed loop B2 with a switching transistor that is not turned on in the first bridge arm Q1, a switching transistor that is not turned on in the second bridge arm Q2, and a power winding L1 connected to the switching transistor, so that the power winding L1 in the closed loop B2 performs energy storage. When both the upper switching transistor and the lower switching transistor in the first bridge arm Q1 are turned off, the upper switching transistor and the lower switching transistor in each third bridge arm Q3 are alternately turned on, and upper switching transistors and lower switching transistors in the three second bridge arms Q2 are all turned off, the power battery 20 may supply power to the motor drive circuit 103 via the power module 102, so that the motor drive circuit 103 runs in an inverter mode to output a three-phase current to the drive motor 40. After both the upper switching transistor and the lower switching transistor in the first bridge arm Q1 are turned off, a current of the power winding L1 cannot change abruptly, and the current of the power winding L1 flows to the power battery 20 through a freewheeling diode of a switching transistor that is not turned on in the first bridge arm Q1. The power battery 20 may form a closed loop B1 with the freewheeling diode of the switching transistor that is not turned on in the first bridge arm Q1, the bus capacitor Cbus, a switching transistor that is not turned on in the second bridge arm Q2, and a power winding L1 connected to the switching transistor, to implement a function of charging the power battery 20 by the generator 30.

In some feasible examples, when the electric vehicle drive system 10 runs in the hybrid drive mode, the generator rectifier circuit runs in a rectifier mode to supply power to the motor drive circuit 103, and the motor drive circuit 103 runs in an inverter mode to output a three-phase current to the drive motor 40.

When the electric vehicle drive system 10 runs in the hybrid drive mode, the upper switching transistor and the lower switching transistor in the first bridge arm Q1 are turned off or alternately turned on, the upper switching transistor and the lower switching transistor in each second bridge arm Q2 in the generator rectifier circuit 101 are alternately turned on, and the upper switching transistor and the lower switching transistor in each third bridge arm Q3 in the motor drive circuit 103 are alternately turned on. In other words, the generator rectifier circuit 101 runs in a rectifier mode, the motor drive circuit 103 runs in an inverter mode, and the power battery 20 runs in a discharging mode, a charging mode, or a standby mode. The hybrid drive mode may be applicable to a scenario in which the power battery 20 has insufficient power, and the generator 30 needs to perform supplementary charging on the power battery 20, to maintain a high power requirement of the power battery 20. The hybrid drive mode may alternatively be applicable to a high-speed overtaking scenario, and acceleration performance can be improved when the generator rectifier circuit 101 and the motor drive circuit 103 operate at the same time. The hybrid drive mode may alternatively be applicable to a scenario in which the power battery 20 has high power, and an output of the generator 30 can maintain a power requirement of the drive motor 40. This can improve efficiency in some operating conditions.

It should be noted that, in the brake regenerative mode or the pure electric drive mode, to avoid burning of the power component, the upper switching transistor and the lower switching transistor in the third bridge arm Q3 may be controlled to be turned off within a period of time, for example, in dead time. Similarly, in the hybrid drive mode, the upper switching transistor and the lower switching transistor in the second bridge arm Q2 may be controlled to be turned off, and the upper switching transistor and the lower switching transistor in the third bridge arm Q3 may also be controlled to be turned off.

In some feasible examples, the hybrid drive mode may include a first hybrid drive mode. When the electric vehicle drive system 10 runs in the first hybrid drive mode, the generator rectifier circuit runs in a rectifier mode, supplies power to the motor drive circuit 103, and charges the power battery 20 via the power module 102, and the motor drive circuit 103 runs in an inverter mode and outputs a three-phase current to the drive motor 40.

The first hybrid drive mode may be applicable to a scenario in which the power battery 20 has insufficient power, and the generator 30 needs to perform supplementary charging on the power battery 20, to maintain a high power requirement of the power battery 20. When the electric vehicle drive system 10 runs in the first hybrid drive mode, the upper switching transistor and the lower switching transistor in the first bridge arm Q1 are turned off or alternately turned on, the upper switching transistor and the lower switching transistor in each second bridge arm Q2 in the generator rectifier circuit 101 are alternately turned on, and the upper switching transistor and the lower switching transistor in each third bridge arm Q3 in the motor drive circuit 103 are alternately turned on.

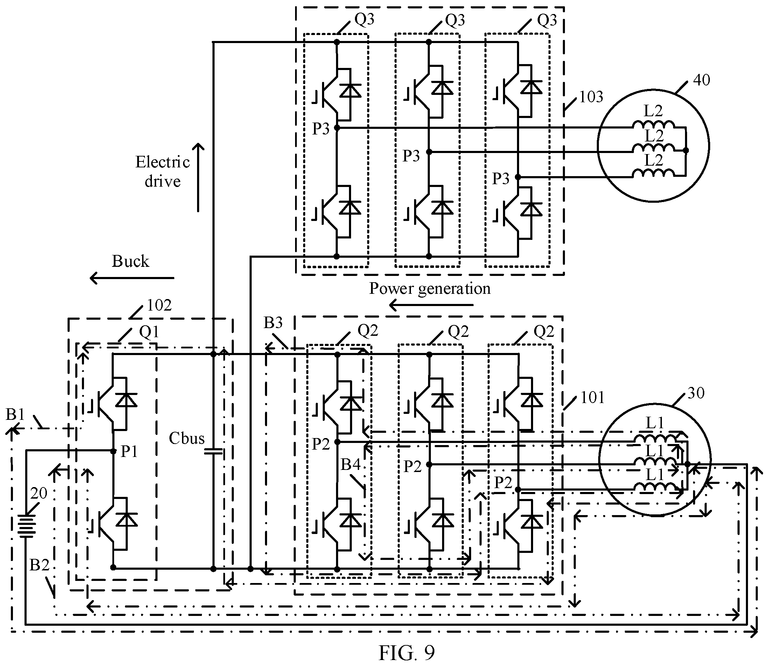

For example, FIG. 9 is another schematic of the closed circuit according to this application. In FIG. 9, an example in which the power battery 20 is configured to connect the generator 30 and a closed loop passes through the second bridge arm Q2 is used for description. As shown in FIG. 9, the closed circuit between the power battery 20, the first bridge arm Q1, the bus capacitor Cbus, the generator rectifier circuit 101, and the generator 30 is equivalent to a buck circuit. When the upper switching transistor and the lower switching transistor in the first bridge arm Q1 are alternately turned on or turned off, the upper switching transistor and the lower switching transistor in each second bridge arm Q2 are alternately turned on, and the upper switching transistor and the lower switching transistor in each third bridge arm Q3 are alternately turned on, the generator rectifier circuit 101 runs in a rectifier mode to charge the power battery 20 via the power module 102. The generator rectifier circuit 101 may further supply power to the motor drive circuit 103 through a closed loop B3, so that the motor drive circuit 103 receives the power supplied by the generator rectifier circuit 101 and runs in an inverter mode to output a three-phase current to the drive motor 40. The power battery 20 runs in a charging mode and receives, via the power module 102, a direct current output by the generator rectifier circuit 101. A closed loop when the upper switching transistor and the lower switching transistor in the first bridge arm Q1 are alternately turned on may be a closed loop B1. A current direction of the closed loop B1 is opposite to a current direction of the closed loop B1 in FIG. 7. This implements charging of the power battery 20 by the generator rectifier circuit 101. A closed loop when both the upper switching transistor and the lower switching transistor in the first bridge arm Q1 are turned off may be a closed loop B2, and a current direction of the closed loop B2 is opposite to a current direction of the closed loop B2 in FIG. 7. This also implements charging of the power battery 20 by the generator rectifier circuit 101. When the electric vehicle drive system 10 runs in the first hybrid drive mode, the generator rectifier circuit 101 charges the power battery 20 and the drive motor 40. When the upper switching transistor and the lower switching transistor in the third bridge arm Q3 are turned off, a current of the generator 30 may flow to the generator rectifier circuit 101 to the generator 30 through a closed loop B4.

In some feasible examples, the hybrid drive mode may include a second hybrid drive mode. When the electric vehicle drive system 10 runs in the second hybrid drive mode, the generator rectifier circuit runs in a rectifier mode and supplies power to the motor drive circuit 103, the power battery supplies power to the motor drive circuit 103 via the power module 102, and the motor drive circuit 103 runs in an inverter mode and outputs a three-phase current to the drive motor 40.

The second hybrid drive mode may be applicable to a high-speed overtaking scenario, and acceleration performance can be improved when the generator rectifier circuit 101 and the motor drive circuit 103 operate at the same time. When the electric vehicle drive system 10 runs in the second hybrid drive mode, the upper switching transistor and the lower switching transistor in the first bridge arm Q1 are turned off or alternately turned on, the upper switching transistor and the lower switching transistor in each second bridge arm Q2 in the generator rectifier circuit 101 are alternately turned on, and the upper switching transistor and the lower switching transistor in each third bridge arm Q3 in the motor drive circuit 103 are alternately turned on.

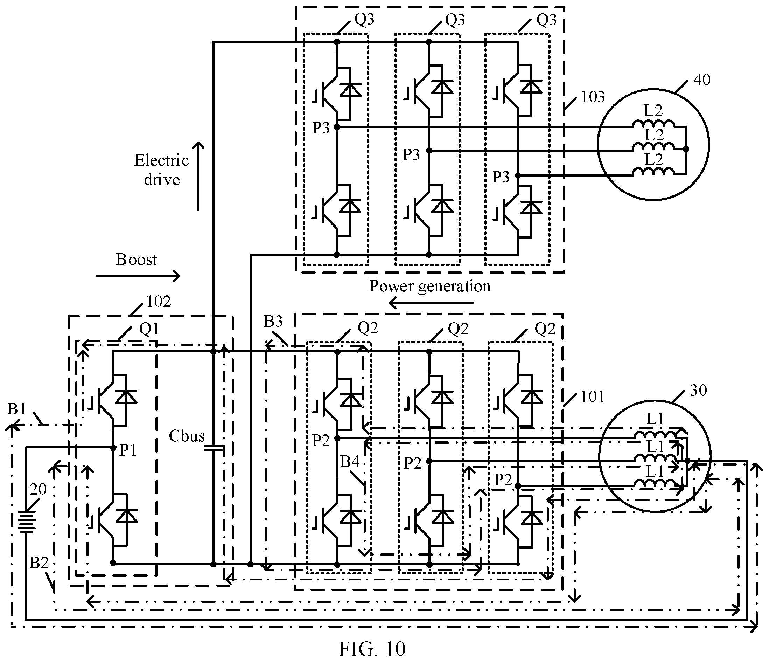

For example, FIG. 10 is another schematic of the closed circuit according to this application. In FIG. 10, an example in which the power battery 20 is configured to connect the generator 30 and a closed loop passes through the second bridge arm Q2 is used for description. As shown in FIG. 10, the closed circuit between the power battery 20, the first bridge arm Q1, the bus capacitor Cbus, the generator rectifier circuit 101, and the generator 30 is equivalent to a boost circuit. When the upper switching transistor and the lower switching transistor in the first bridge arm Q1 are alternately turned on or turned off, the upper switching transistor and the lower switching transistor in each second bridge arm Q2 are alternately turned on, and the upper switching transistor and the lower switching transistor in each third bridge arm Q3 are alternately turned on, the generator rectifier circuit 101 runs in a rectifier mode to charge the drive motor 40 via the motor drive circuit 103. The generator rectifier circuit 101 may further supply power to the motor drive circuit 103 through a closed loop B3, so that the motor drive circuit 103 receives the power supplied by the generator rectifier circuit 101 and runs in an inverter mode to output a three-phase current to the drive motor 40. The power battery 20 runs in a discharging mode, and charges the drive motor 40 via the power module 102 and the motor drive circuit 103. In this way, the motor drive circuit 103 can receive a direct current output by the generator rectifier circuit 101 and a direct current output by the power module 102, and run in an inverter mode to output a three-phase current to the drive motor 40. A closed loop when the upper switching transistor and the lower switching transistor in the first bridge arm Q1 are alternately turned on may be a closed loop B1. A current direction of the closed loop B1 is opposite to a current direction of the closed loop B1 in FIG. 7. This implements charging of the power battery 20 by the generator rectifier circuit 101. A closed loop when both the upper switching transistor and the lower switching transistor in the first bridge arm Q1 are turned off may be a closed loop B2, and a current direction of the closed loop B2 is opposite to a current direction of the closed loop B2 in FIG. 7. This also implements charging of the power battery 20 by the generator rectifier circuit 101. When the electric vehicle drive system 10 runs in the second hybrid drive mode, the generator rectifier circuit 101 and the power battery 20 charge the drive motor 40. When the upper switching transistor and the lower switching transistor in the third bridge arm Q3 are turned off, a current of the generator 30 may flow to the generator rectifier circuit 101 to the generator 30 through a closed loop B4.

In some feasible examples, the hybrid drive mode may include a third hybrid drive mode. When the electric vehicle drive system 10 runs in the third hybrid drive mode, the generator rectifier circuit 101 runs in a rectifier mode and supplies power to the motor drive circuit 103, and the motor drive circuit 103 runs in an inverter mode and outputs a three-phase current to the drive motor 40.

The third hybrid drive mode may be applicable to a scenario in which the power battery 20 has high power, and an output of the generator 30 can maintain a power requirement of the drive motor 40. This can improve efficiency in some operating conditions. When the electric vehicle drive system 10 runs in the third hybrid drive mode, the upper switching transistor and the lower switching transistor in the first bridge arm Q1 may be turned off, the upper switching transistor and the lower switching transistor in each second bridge arm Q2 in the generator rectifier circuit 101 may be alternately turned on, and the upper switching transistor and the lower switching transistor in each third bridge arm Q3 in the motor drive circuit 103 may be alternately turned on.

In some feasible examples, the electric vehicle drive system 10 further includes the engine, and when the engine drives the electric vehicle, the power module 102, the motor drive circuit 103, and the generator rectifier circuit 101 respectively run in a standby mode. Upper switching transistors and lower switching transistors in the first bridge arm Q1, each second bridge arm Q2, and each third bridge arm Q3 may be all turned off. In other words, none of the power module 102, the motor drive circuit 103, and the generator rectifier circuit 101 is in operation. The engine drives the electric vehicle for travelling, and may be applicable to a high-speed cruise scenario.

In this embodiment of this application, the electric vehicle may include the generator, the drive motor, and the drive system 10 described in FIG. 1 to FIG. 10, or may include the generator, the drive motor, the generator rectifier circuit, the motor drive circuit, the power module, and a controller that is not shown in FIG. 1 to FIG. 10, or may include the generator, the drive motor, the drive system, the generator rectifier circuit, the motor drive circuit, the power module, and the controller. For a description of the controller, refer to a diagram of a structure of the drive system 10 in FIG. 6.

The controller may be configured to connect one end of each switching transistor in the first bridge arm Q1, one end of each switching transistor in each second bridge arm Q2, and one end of each switching transistor in each third bridge arm Q3, and is configured to control each switching transistor to be turned on or off, to control the power module 102, the motor drive circuit 103, and the generator rectifier circuit 101 to run in a corresponding operating mode, and may further control sending a PWM driver gating signal in a non-standby mode. The controller may include, but is not limited to, a control board or a control chip. For example, the controller may include a battery management system (battery management system, BMS), a micro control unit

(micro control unit, MCU), a central processing unit (central processing unit, CPU), another general purpose processor, a digital signal processor (digital signal processor, DSP), an application specific integrated circuit (application specific integrated circuit, ASIC), a field-programmable gate array (field-programmable gate array, FPGA), a pulse width modulation (pulse width modulation, PWM), or another programmable logic device, a discrete gate or transistor logic device, or a discrete hardware component.

In this embodiment of this application, the controller may be configured to: control the upper switching transistor and the lower switching transistor in the first bridge arm Q1 to be alternately turned on, so that the two ends of the first bridge arm Q1 output direct currents to two ends of the three third bridge arms Q3; and control the upper switching transistor and the lower switching transistor in each third bridge arm Q3 in the motor drive circuit 103 to be alternately turned on, so that the bridge arm midpoints P3 of the three third bridge arms Q3 output three-phase alternating currents. In this way, when the electric vehicle drive system 10 includes the motor drive circuit 103 and the power module 102, the power battery 20 can independently supply power to the drive motor 40 or the power battery 20 and the generator 30 supply power to the drive motor 40 at the same time by controlling a turn-on state and a turn-off state of the switching transistors in the motor drive circuit 103 and the power module 102.

Alternatively, the controller may be configured to: control the upper switching transistor and the lower switching transistor in the first bridge arm Q1 to be alternately turned on, so that the two ends of the first bridge arm Q1 output direct currents to two ends of the three third bridge arms Q3; and control the upper switching transistor and the lower switching transistor in each second bridge arm Q2 in the generator rectifier circuit 101 to be alternately turned on, so that two ends of the three second bridge arms Q2 output direct current; or control upper switching transistors and lower switching transistors in the three second bridge arms Q2 to be turned off. In this way, when the electric vehicle drive system 10 includes the generator rectifier circuit 101 and the power module 102, the power battery 20 can independently supply power to the drive motor 40 or the power battery 20 and the generator 30 supply power to the drive motor 40 at the same time by controlling a turn-on state and a turn-off state of the switching transistors in the generator rectifier circuit 101 and the power module 102.

In some feasible examples, the controller may be configured to: control the upper switching transistor and the lower switching transistor in the first bridge arm Q1 to be alternately turned on, so that the two ends of the first bridge arm Q1 output direct currents to two ends of the three third bridge arms Q3; and control the upper switching transistor and the lower switching transistor in each second bridge arm Q2 in the generator rectifier circuit 101 to be alternately turned on, so that two ends of the three second bridge arms Q2 output direct currents; or control upper switching transistors and lower switching transistors in the three second bridge arms Q2 to be turned off, and control the upper switching transistor and the lower switching transistor in each third bridge arm Q3 in the motor drive circuit 103 to be alternately turned on, so that bridge arm midpoints P3 of the three third bridge arms Q3 output three-phase alternating currents. In this way, when the electric vehicle drive system 10 includes the generator rectifier circuit 101, the motor drive circuit 103, and the power module 102, the power battery 20 can independently supply power to the drive motor 40 or the power battery 20 and the generator 30 supply power to the drive motor 40 at the same time by controlling a turn-on state and a turn-off state of the switching transistors in the generator rectifier circuit 101, the motor drive circuit 103, and the power module 102.

In some feasible examples, the controller is configured to: control the upper switching transistor and the lower switching transistor in each second bridge arm Q2 in the generator rectifier circuit 101 to be alternately turned on, so that two ends of the three second bridge arms Q2 output direct currents; and control the upper switching transistor and the lower switching transistor in the first bridge arm Q1 to be alternately turned on, so that the bridge arm midpoint P1 of the first bridge arm Q1 transmits a direct current to charge the power battery 20. In this way, the generator 30 supplies power to the power battery 20.

In some feasible examples, the controller is configured to: control the upper switching transistor and the lower switching transistor in each second bridge arm Q2 in the generator rectifier circuit 101 to be alternately turned on, so that two ends of the three second bridge arms Q2 output direct currents; and control the upper switching transistor and the lower switching transistor in the first bridge arm Q1 to be alternately turned on, so that the bridge arm midpoint P1 of the first bridge arm Q1 transmits a direct current to charge the power battery 20; and control the upper switching transistor and the lower switching transistor in each third bridge arm Q3 in the motor drive circuit 103 to be alternately turned on, so that bridge arm midpoints P3 of the three third bridge arms Q3 transmit direct currents and output three-phase alternating currents to the drive motor 40. In this way, the generator 30 supplies power to the power battery 20 and the drive motor 40.

In some feasible examples, the controller is configured to: control the upper switching transistor and the lower switching transistor in each third bridge arm Q3 in the motor drive circuit 103 to be alternately turned on, so that two ends of the three third bridge arms Q3 output direct currents; and control the upper switching transistor and the lower switching transistor in the first bridge arm Q1 to be alternately turned on, so that the bridge arm midpoint P1 of the first bridge arm Q1 transmits a direct current to charge the power battery 20. In this way, the power battery 20 can store recovered electric energy in kinetic energy generated by the drive motor 40.

In some feasible examples, the controller is configured to: control the upper switching transistor and the lower switching transistor in each second bridge arm Q2 in the generator rectifier circuit 101 to be turned off; and control the upper switching transistor and the lower switching transistor in the first bridge arm Q1 to be alternately turned on, and the upper switching transistor and the lower switching transistor in each third bridge arm Q3 in the motor drive circuit 103 to be alternately turned on, so that two ends of the three third bridge arms Q3 output direct currents to charge the power battery 20 via a turned-on switching transistor in the first bridge arm Q1 and the bridge arm midpoint P1 of the first bridge arm Q1. In this way, the power battery 20 can store recovered electric energy in kinetic energy generated by the drive motor 40.

In some feasible examples, the controller is configured to: control the upper switching transistor and the lower switching transistor in the first bridge arm Q1 to be turned off, and control the upper switching transistor and the lower switching transistor in each second bridge arm Q2 in the generator rectifier circuit 101 to be alternately turned on, so that two ends of the three second bridge arms Q2 output direct currents; and control the upper switching transistor and the lower switching transistor in each third bridge arm Q3 in the motor drive circuit 103 to be alternately turned on, so that bridge arm midpoints P3 of the three third bridge arms Q3 output three-phase alternating currents. In this way, the generator 30 supplies power to the drive motor 40, and the electric vehicle can be in a hybrid drive mode.

In some feasible examples, the controller is configured to: control the upper switching transistor and the lower switching transistor in the first bridge arm Q1 to be turned off, and control the upper switching transistor and the lower switching transistor in each second bridge arm Q2 in the generator rectifier circuit 101 to be turned off, and control the upper switching transistor and the lower switching transistor in each third bridge arm Q3 in the motor drive circuit 103 to be turned off, so that the engine drives the electric vehicle. In this way, when none of the power module 102, the generator rectifier circuit 101, and the motor drive circuit 103 is in operation, the engine independently drives the electric vehicle.

In some feasible examples, the controller is configured to obtain turn-on time and turn-off time of switching transistors in the first bridge arm Q1, each second bridge arm Q2, and each third bridge arm Q3 based on a voltage of the power battery 20, a voltage of the bus capacitor Cbus, and a charge/discharge management requirement of the power battery 20.

The charge/discharge management requirement of the power battery 20 is used to determine a charge policy or a discharge policy of the power battery 20, and may include a target value of a charge amount or a discharge amount, a charge rate, a discharge rate, a duty cycle between carriers, and the like. This is not limited herein. Generally, whether to perform charging or discharging may be determined based on a value relationship between the voltage of the power battery 20 and the voltage of the bus capacitor Cbus, or whether to perform charging or discharging, a charging policy, a discharging policy, or the like may be determined based on data monitored in a battery management system (battery management system, BMS). Actually, when the power module 102 operates, a sum of three-phase currents of three power windings in the generator 30 further needs to be controlled to be 0, and a charging current or a discharging current required by the power module 102 needs to be generated. A duty cycle in the power module 102 is a sum of a duty cycle of the power module 102 and a duty cycle of the generator rectifier circuit 101.

When obtaining a sum of turn-on time and turn-off time of the switching transistors in the first bridge arm Q1, each second bridge arm Q2, and each third bridge arm Q3, the controller is configured to: control turn-on or turn-off of the switching transistors in the first bridge arm Q1 based on the turn-on time and the turn-off time of the switching transistors in the first bridge arm Q1; control turn-on or turn-off of the switching transistors in each second bridge arm Q2 based on the turn-on time and the turn-off time of the switching transistors in the second bridge arm Q2; and control turn-on or turn-off of the switching transistors in the third bridge arm Q3 based on the turn-on time and the turn-off time of the switching transistors in the third bridge arm Q3. In other words, the switching transistor is controlled to be turned on or off based on the turn-on time and the turn-off time of each switching transistor. This can improve control accuracy, and helps improve stability of the electric vehicle drive system 10. Optionally, the turn-on time and the turn-off time of each switching transistor are controlled based on a differential mode control value and a common mode control value, to meet different requirements of the electric vehicle drive system 10.

An embodiment of this application further provides a control method for an electric vehicle drive system. For details, refer to the foregoing description of the controller. Details are not described herein again.

An embodiment of this application further provides a chip system. The chip system includes a processor, a memory, and an interface circuit. The memory, the interface circuit, and the processor are interconnected through a line. The memory stores instructions. When the instructions are executed by the processor, the foregoing method procedure is implemented.

An embodiment of this application further provides a computer device, including a memory and a processor connected to the memory. The memory is configured to store a computer program, and the processor is configured to invoke the computer program, so that the computer device performs the foregoing method.

An embodiment of this application further provides a computer-readable storage medium. The computer-readable storage medium stores a computer program, and the computer program is suitable for being loaded and executed by a processor, to enable a computer device having the processor to perform the foregoing method.

An embodiment of this application further provides a computer program product. When the computer program product includes computer instructions, the computer instructions are stored in a computer-readable storage medium. A processor of a computer device reads the computer instructions from the computer-readable storage medium, and the processor executes the computer instructions, to enable the computer device to perform the foregoing method.

Through implementation of this application, the power module 102 and the generator rectifier circuit 101 may be integrated into the electric vehicle drive system, or the power module 102 and the motor drive circuit 103 may be integrated into the electric vehicle drive system, or the power module 102 and the generator rectifier circuit 101 and the motor drive circuit 103 may be integrated into the electric vehicle drive system. In this way, the power module 102 can reuse the bridge arm in the generator rectifier circuit 101 or the motor drive circuit 103 and a component in the generator 30 or the drive motor 40, thereby reducing a volume of the electric vehicle drive system 10, improving energy efficiency, and further improving applicability.

It should be noted that the terms "first" and "second" are merely intended for a purpose of description, and shall not be understood as an indication or implication of relative importance.

A person of ordinary skill in the art may understand that all or a part of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a mobile storage device, a read-only memory (read-only memory, ROM), a random access memory (random access memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An electric vehicle drive system, wherein the electric vehicle drive system comprises at least one of a generator rectifier circuit and a motor drive circuit, and a power module, wherein
the power module comprises a bus capacitor and a first bridge arm, a bridge arm midpoint of the first bridge arm is configured to connect to a power battery, and two ends of the first bridge arm are respectively configured to connect to two ends of the bus capacitor;
the generator rectifier circuit comprises three second bridge arms connected in parallel, two ends of each second bridge arm are respectively configured to connect to the two ends of the bus capacitor, and bridge arm midpoints of all the second bridge arms are separately configured to connect to a generator; and
the motor drive circuit comprises three third bridge arms connected in parallel, two ends of each third bridge arm are respectively configured to connect to the two ends of the bus capacitor, and bridge arm midpoints of all the third bridge arms are separately configured to connect to a drive motor.

2. The electric vehicle drive system according to claim 1, wherein a running mode of the electric vehicle drive system comprises a brake regenerative mode, a pure electric drive mode, and a hybrid drive mode, wherein
when the electric vehicle drive system runs in the brake regenerative mode, the motor drive circuit runs in a rectifier mode and charges the power battery by outputting a direct current via the power module;
when the electric vehicle drive system runs in the pure electric drive mode, the motor drive circuit receives power supplied by the power battery via the power module, and runs in an inverter mode to output a three-phase current to the drive motor; or
when the electric vehicle drive system runs in the hybrid drive mode, the generator rectifier circuit runs in a rectifier mode to supply power to the motor drive circuit, and the motor drive circuit runs in an inverter mode to output a three-phase current to the drive motor.

3. The electric vehicle drive system according to claim 2, wherein when the electric vehicle drive system runs in the brake regenerative mode or the pure electric drive mode, an upper switching transistor and a lower switching transistor in the first bridge arm are turned off or alternately turned on, an upper switching transistor and a lower switching transistor in each second bridge arm are turned off, and an upper switching transistor and a lower switching transistor in each third bridge arm are alternately turned on.

4. The electric vehicle drive system according to claim 2, wherein when the electric vehicle drive system runs in the hybrid drive mode, an upper switching transistor and a lower switching transistor in the first bridge arm are turned off or alternately turned on, an upper switching transistor and a lower switching transistor in each second bridge arm are alternately turned on, and an upper switching transistor and a lower switching transistor in each third bridge arm are alternately turned on.

5. The electric vehicle drive system according to claim 2, wherein the hybrid drive mode comprises a first hybrid drive mode, a second hybrid drive mode, and a third hybrid drive mode, wherein
when the electric vehicle drive system runs in the first hybrid drive mode, the generator rectifier circuit runs in a rectifier mode, supplies power to the motor drive circuit, and charges the power battery via the power module, and the motor drive circuit runs in an inverter mode and outputs a three-phase current to the drive motor;
when the electric vehicle drive system runs in the second hybrid drive mode, the generator rectifier circuit runs in a rectifier mode and supplies power to the motor drive circuit, the power battery supplies power to the motor drive circuit via the power module, and the motor drive circuit runs in an inverter mode and outputs a three-phase current to the drive motor; or
when the electric vehicle drive system runs in the third hybrid drive mode, the generator rectifier circuit runs in a rectifier mode and supplies power to the motor drive circuit, and the motor drive circuit runs in an inverter mode and outputs a three-phase current to the drive motor.

6. The electric vehicle drive system according to claim 5, wherein when the electric vehicle drive system runs in the first hybrid drive mode or the second hybrid drive mode, an upper switching transistor and a lower switching transistor in the first bridge arm are turned off or alternately turned on, an upper switching transistor and a lower switching transistor in each second bridge arm are alternately turned on, and an upper switching transistor and a lower switching transistor in each third bridge arm are alternately turned on.

7. The electric vehicle drive system according to claim 5, wherein when the electric vehicle drive system runs in the third hybrid drive mode, an upper switching transistor and a lower switching transistor in the first bridge arm are turned off, an upper switching transistor and a lower switching transistor in each second bridge arm are alternately turned on, and an upper switching transistor and a lower switching transistor in each third bridge arm are alternately turned on.

8. The electric vehicle drive system according to claim 1, wherein the electric vehicle drive system further comprises an engine, and when the engine drives the electric vehicle, the power module, the motor drive circuit, and the generator rectifier circuit respectively run in a standby mode.

9. The electric vehicle drive system according to claim 8, wherein when the engine drives the electric vehicle, an upper switching transistor and a lower switching transistor in the first bridge arm are turned off, an upper switching transistor and a lower switching transistor in each second bridge arm are turned off, and an upper switching transistor and a lower switching transistor in each of the three third bridge arms are turned off.

10. A controller for an electric vehicle drive system, wherein the electric vehicle drive system comprises at least one of a generator rectifier circuit and a motor drive circuit, and a power module, the power module comprises a bus capacitor and a first bridge arm, the generator rectifier circuit comprises three second bridge arms connected in parallel, the motor drive circuit comprises three third bridge arms connected in parallel, a bridge arm midpoint of the first bridge arm is configured to connect to a power battery, two bridge arm ends of the first bridge arm are respectively configured to connect two bridge arm ends of each second bridge arm or two bridge arm ends of each third bridge arm, bridge arm midpoints of all the second bridge arms are separately configured to connect to a generator, and bridge arm midpoints of all the third bridge arms are separately configured to connect to a drive motor; and the controller is configured to:
control an upper switching transistor and a lower switching transistor in the first bridge arm to be alternately turned on, so that the two ends of the first bridge arm output direct currents to two ends of the three third bridge arms; and control an upper switching transistor and a lower switching transistor in each third bridge arm to be alternately turned on, so that the bridge arm midpoints of the three third bridge arms output three-phase alternating currents; or
control an upper switching transistor and a lower switching transistor in the first bridge arm to be alternately turned on, so that the two ends of the first bridge arm output direct currents to two ends of the three third bridge arms; and control an upper switching transistor and a lower switching transistor in each second bridge arm to be alternately turned on, so that two ends of the three second bridge arms output direct currents; or control upper switching transistors and lower switching transistors in the three second bridge arms to be turned off.

11. The controller according to claim 10, wherein the controller is configured to:
control the upper switching transistor and the lower switching transistor in each second bridge arm to be alternately turned on, so that the two ends of the three second bridge arms output direct currents; and control the upper switching transistor and the lower switching transistor in the first bridge arm to be alternately turned on, so that the bridge arm midpoint of the first bridge arm transmits a direct current to charge the power battery; or
control the upper switching transistor and the lower switching transistor in each third bridge arm to be alternately turned on, so that the two ends of the three third bridge arms output direct currents; and control the upper switching transistor and the lower switching transistor in the first bridge arm to be alternately turned on, so that the bridge arm midpoint of the first bridge arm transmits a direct current to charge the power battery.

12. The controller according to claim 10, wherein the controller is configured to:
control the upper switching transistor and the lower switching transistor in each second bridge arm to be turned off, and control the upper switching transistor and the lower switching transistor in the first bridge arm to be alternately turned on and the upper switching transistor and the lower switching transistor in each third bridge arm to be alternately turned on, so that the two ends of the three third bridge arms output direct currents to charge the power battery via a turned-on switching transistor in the first bridge arm and the bridge arm midpoint of the first bridge arm.

13. The controller according to claim 10, wherein the controller is configured to:
control the upper switching transistor and the lower switching transistor in the first bridge arm to be turned off, and control the upper switching transistor and the lower switching transistor in each second bridge arm to be alternately turned on, so that the two ends of the three second bridge arms output direct currents; and control the upper switching transistors and the lower switching transistors in the three third bridge arms to be alternately turned on, so that the bridge arm midpoints of the three third bridge arms output three-phase alternating currents.

14. An electric vehicle, comprising:
a generator, a drive motor, and the drive system according to any one of claims 1 to 9; or
a generator, a drive motor, a drive system, a generator rectifier circuit, a motor drive circuit, a power module, and the controller according to any one of claims 10 to 13.
